## Europäisches Patentamt

## European Patent Office

## Office européen des brevets

(19)

(11) Veröffentlichungsnummer: **0 150 851 B1**

(12) **EUROPÄISCHE PATENTSCHRIFT**

(45) Veröffentlichungstag der Patentschrift:
**18.01.89**

(51) Int. Cl.⁴: **F 41 G 7/30**, G 01 S 7/38

(21) Anmeldenummer: **85100964.7**

(22) Anmeldetag: **31.01.85**

(54) **Einrichtung zur Fernlenkung eines Flugkörpers.**

(30) Priorität: **02.02.84 DE 3403558**

(43) Veröffentlichungstag der Anmeldung:
**07.08.85 Patentblatt 85/32**

(45) Bekanntmachung des Hinweises auf die Patenterteilung:
**18.01.89 Patentblatt 89/3**

(84) Benannte Vertragsstaaten:
**DE FR GB IT**

(56) Entgegenhaltungen:
**FR-A- 2 024 305**
**US-A- 3 856 237**
**US-A- 3 902 684**

**IEE PROCEEDINGS SECTION A-K, Band 129, Nr. 3, Teil F, Juni 1982, Seiten 113-132, Old Woking, Surrey, GB; P.M. GRANT u.a.: "Introduction to electronic warfare"**

(73) Patentinhaber: **Licentia Patent-Verwaltungs-GmbH, Theodor-Stern-Kai 1, D-6000 Frankfurt/Main 70 (DE)**

(72) Erfinder: **Jehle, Franz, Dipl.-Ing., Fünf Bäume Weg 148, D-7900 Ulm (DE)**

(74) Vertreter: **Schulze, Harald Rudolf, Dipl.-Ing. et al, Licentia Patent-Verwaltungs-GmbH Theodor-Stern-Kai 1, D-6000 Frankfurt/Main 70 (DE)**

## Beschreibung

Die Erfindung betrifft eine Vorrichtung zur Fernlenkung eines Flugkörpers der im Oberbegriff des Patentanspruchs 1 angegebenen Art. Eine derartige Vorrichtung ist beispielsweise aus IEE Proceedings, Section A-K, Band 129, Nr. 3, Teil F (Juni 1982), S. 113-132 bekannt. Funkelektrische Einrichtungen in Flugzeugen umfassen gewöhnlich neben anderem Radaranlagen zur Ortung von in Flugrichtung befindlichen Zielen und Störsendeeinrichtungen zur Störung gegnerischer Ortungsanlagen oder Funkverbindungen. Für einen vom Flugzeug aus in Richtung eines von der Radaranlage erfassten Ziels gestarteten Flugkörper ergibt sich zusätzlich die Notwendigkeit, den Flugkörper zumindest bis zur Zielortung durch flugkörpereigene Ortungseinrichtungen über eine Funkverbindung mit Flugbahnkommandos, die ein im Flugzeug befindlicher Zielrechner aus den Radardaten errechnet, zu versorgen.

Aufgabe der vorliegenden Erfindung ist es, eine Vorrichtung zur Fernlenkung eines Flugkörpers der beschriebenen Art anzugeben, die mit geringem Aufwand eine derartige Fernlenkung zuverlässig ermöglicht.

Die Erfindung ist im Patentanspruch 1 beschrieben. Der Unteranspruch enthält eine vorteilhafte Ausführungsform der Erfindung.

Die Erfindung gewährleistet eine sichere Kommandoübertragung vom Flugzeug auf den Flugkörper ohne zusätzliche Sende- und Antenneneinrichtungen. Für den Fall, dass bei den Störsendeeinrichtungen ein variabel steuerbarer Modulator vorhanden ist, kann dieser vorteilhafterweise auch für die Modulation der Kommandotelegramme eingesetzt werden.

Durch die Mehrfachnutzung der Störsendeeinrichtungen ist die erfindungsgemässe Lösung äusserst kostengünstig. Durch die relativ grosse Halbwertsbreite des Richtdiagramms der Störsende-Richtantenne wird der Flugkörper auch bei nicht direkt auf das Ziel gerichteter Flugbahn immer von der Hauptkeule dieses Richtdiagramms erfasst, woraus sich für alle Bahnpositionen eine gute Energiebilanz für die Funkverbindung ergibt. Daraus wiederum resultiert eine hohe Störsicherheit für die Fernlenkung. Während der Übertragung der Fernlenkkommandos ist ein eventueller Störbetrieb zu unterbrechen, was aber bei der Kürze der zur Übertragung benötigten Zeit, z.B. 20 ms im Abstand von 0,5 s, vernachlässigbar ist.

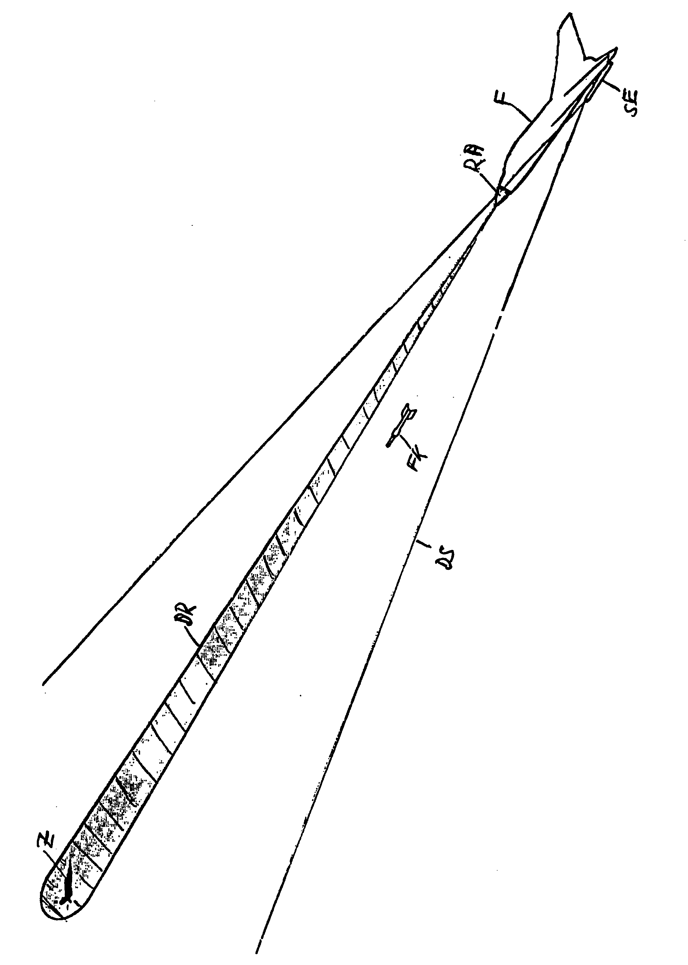

Die Erfindung ist nachfolgend anhand der Abbildung nach veranschaulicht.

Durch eine im Flugzeug F angeordnete Radaranlage RA mit einem scharf gebündelten Richtdiagramm DR (schraffiert) wird ein Ziel Z erfasst. Ein vom Flugzeug aus auf das Ziel gestarteter Flugkörper FK wird vom Flugzeug aus mittels Störsendeeinrichtungen SE über eine Funkverbindung mit Flugbahnkommandos, die aus den Zielortungsergebnissen der Radaranlage errechnet werden, versorgt. Die Hauptkeule des Richtdiagramms DS der Störsende-Richtantenne ist wesentlich breiter als das Richtdiagramm der Radarantenne. Innerhalb der Hauptkeule DS ist die effektiv abgestrahlte Leistung so hoch, dass sich für die Funkverbindung jederzeit eine gute Energiebilanz ergibt. Durch die grosse Halbwertsbreite kann der Flugkörper FK ohne Beeinträchtigung der Funkverbindung das Ziel zur Verringerung der Entdeckungswahrscheinlichkeit auch auf einer von der direkten Verbindungslinie abweichenden, stark gekrümmten Flugbahn anfliegen. Die Störsende-Richtantenne ist zur Vermeidung starker Abschattungseffekte möglichst weit aussen an der Tragfläche montiert.

## Patentansprüche

1. Vorrichtung zur Fernlenkung eines Flugkörpers (FK) auf ein Ziel (Z) über eine Funkverbindung von einem Flugzeug (F) aus, das mit einer Radaranlage (RA) zur Zielortung, einem Zielrechner zur Errechnung der erforderlichen Flugbahndaten des Flugkörpers aus den Zielortdaten sowie breitbandigen Störsendeeinrichtungen ausgerüstet ist, die einen Sender und eine Richtantenne, deren Richtdiagramm (DS) im wesentlichen in Flugrichtung zeigt und eine gegenüber dem Diagramm der Radarantenne eine sehr grosse Halbwertsbreite aufweist, beinhalten, welche Vorrichtung Mittel zur Übertragung der Flugbahndaten über eine Richtfunkstrecke vom Flugzeug zum Flugkörper aufweist, dadurch gekennzeichnet, dass die Mittel zur Übertragung der Flugbahndaten von dem Sender und der Richtantenne der Störsendeeinrichtungen (SE) gebildet sind und dass eine Steuereinrichtung vorgesehen ist, die nach dem Start eines Flugkörpers in regelmässigen Zeitabständen den Sender unter Unterbrechung der Aussendung von Störsignalen schmalbandig auf die Frequenz der Richtfunkstrecke zum Flugkörper abstimmt und die Übertragung der Flugbahndaten zum Flugkörper veranlasst.

2. Einrichtung nach Anspruch 1, dadurch gekennzeichnet, dass die Richtantenne am äusseren Ende einer Tragfläche des Flugzeugs (F) angeordnet ist.

## Claims

1. Device for the remote control of a projectile (FK) towards a target (Z) by way of a radio connection from an aircraft (F), which is equipped with a radar installation (RA) for the location of the target, a target computer for the computation of the required flight path data of the projectile from the target location data as well as with wideband jamming equipments which contain a transmitter and a directional aerial, the directional diagram (DS) of which points substantially in direction of flight and displays a very large half-value width compared with the diagram of the radar aerial, which device displays means for the transmission of the flight path data by way of a directional radio link from the aircraft to the projectile, characterised thereby, that the means for the transmission of the flight path data are formed by the transmitter and the directional aerial of the jamming equipments (SE) and that a control equipment is provided, which after the start of a projectile at regular time intervals tunes the transmitter in narrow bandwidth to the frequency of the directional radio link to the projectile while interrupting the emission of jamming signals and causes the transmission of the flight path data to the projectile.

2. Equipment according to claim 1, characterised thereby, that the directional aerial is arranged at the outer end of a lifting airfoil of the aircraft (F).

## Revendications

1. Dispositif pour téléguider un engin volant (FK) vers une cible Z au moyen d'une liaison hertzienne, depuis un avion (F) qui est équipé d'une installation radar (RA) pour localiser la cible, d'un calculateur de cible pour élaborer, à partir des données de localisation de la cible, les données de vol nécessaires pour l'engin volant, ainsi que de dispositifs d'émission de brouillage à large bande, lesquels comportent un émetteur et une antenne directionnelle dont le diagramme directionnel (DS) est sensiblement orienté dans la direction du vol et présente une largeur de lobe très grande par rapport au diagramme de l'antenne radar, ce dispositif présentant des moyens pour transmettre, par un faisceau hertzien de l'avion à l'engin volant, les données de trajectoire de vol, caractérisé par le fait que les moyens pour transmettre les données de trajactoire de vol sont constitués par l'émetteur et l'antenne directionnelle des dispositifs d'émission de brouillage (SE), et par le fait qu'il est prévu un dispoisitif de commande qui, après le lancement d'un engin, réalise à intervalles de temps réguliers, sous interruption de l'émission de signaux de brouillage, l'accord à bande étroite de l'émetteur sur la fréquence du faisceau hertzien allant à l'engin volant, et provoque la transmission des données de vol à l'engin volant.

2. Dispositif selon revendication 1, caractérisé par le fait que l'antenne directionnelle est agencée à l'extrémité extérieure d'une surface portante de l'avion (F).